(19) Europäisches Patentamt
European Patent Office
Office européen des brevets

(11) EP 4 608 922 B1

(12) **EUROPEAN PATENT SPECIFICATION**

(45) Date of publication and mention of the grant of the patent:
**13.05.2026 Bulletin 2026/20**

(21) Application number: **23847662.6**

(22) Date of filing: **11.12.2023**

(51) International Patent Classification (IPC):
***C09D 133/08*** *(2006.01)* ***C09D 7/43*** *(2018.01)*
***C08F 230/02*** *(2006.01)* ***C08G 18/28*** *(2006.01)*

(52) Cooperative Patent Classification (CPC):
(C-Sets available)
**C08G 18/4833; C08G 18/283; C08G 18/758; C08L 71/02; C09D 7/43; C09D 133/08;**
C08G 18/10; C08G 65/2612; C08G 65/3353
(Cont.)

(86) International application number:
**PCT/US2023/083275**

(87) International publication number:
**WO 2024/129553 (20.06.2024 Gazette 2024/25)**

# (54) RHEOLOGY MODIFIER FOR IMPROVED VISCOSITY LOSS ON TINTING IN PAINT FORMULATIONS CONTAINING ORGANO-PHOSPHORUS-FUNCNTIONALIZED LATEXES

RHEOLOGIEMODIFIKATOR FÜR VERBESSERTEN VISKOSITÄTSVERLUST BEI FÄRBUNG IN FARBFORMULIERUNGEN MIT ORGANOPHOSPHORFUNKTIONALISIERTEN LATEXEN

MODIFICATEUR DE RHÉOLOGIE POUR UNE PERTE DE VISCOSITÉ AMÉLIORÉE LORS DE LA COLORATION DANS DES FORMULATIONS DE PEINTURE CONTENANT DES LATEX FONCTIONNALISÉS PAR UN PHOSPHORE ORGANIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.12.2022 US 202263432755 P**

(43) Date of publication of application:
**03.09.2025 Bulletin 2025/36**

(73) Proprietor: **Rohm and Haas Company**
**Collegeville, PA 19426 (US)**

(72) Inventors:
- **RILEY, John K.**
  **Collegeville, Pennsylvania 19426 (US)**
- **RABASCO, John J.**
  **Collegeville, Pennsylvania 19426 (US)**

(74) Representative: **Beck Greener LLP**
**Fulwood House**
**12 Fulwood Place**
**London WC1V 6HR (GB)**

(56) References cited:
**EP-A1- 2 166 044** **US-A1- 2020 262 975**
**US-B2- 8 318 848** **US-B2- 9 745 492**
**US-B2- 9 920 194**

- **IUPAC ED - MACNAUGHT ALAN D ET AL: "alkyl groups", 1997, XP002585005, ISBN: 978-0-86542-684-9, Retrieved from the Internet <URL:http://www.iupac.org/goldbook/A00228.pdf> [retrieved on 19970101]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 71/02, C08L 71/02;**
**C09D 133/08, C08L 75/08;**
**C09D 133/08, C08L 75/08, C08K 3/013;**
C08G 18/10, C08G 18/283

## Description

### Background of the Invention

The present invention relates to rheology modifiers having improved viscosity retention of tinted coatings formulations.

US 9,745,492 relates to a composition comprising an aqueous dispersion of an associative thickener having a hydrophobic portion with a calculated log P in the range of from 2.7 to 4.8; and composite particles comprising phosphorus acid functionalized polymer particles adsorbed to the surfaces of $TiO_2$ particles. This provides formulators with flexibility in their use of low and mid shear rate thickeners to balance paint performance properties.

Hydrophobically modified alkylene oxide urethane polymers, more particularly hydrophobically modified ethylene oxide urethane polymers (HEURs) are preferred rheology modifiers for paints because of the combination of good flow and levelling and reduced water sensitivity. HEURs build viscosity in aqueous dispersions through associative thickening, and this viscosity is sensitive to the addition of solvents and surfactants which can interfere with the HEUR associative network. HEUR-thickened formulations often lose a substantial amount of viscosity when tinted with colorant dispersions and concentrates, as these colorants are comprised of organic and inorganic pigments, solvents, and surface-active agents which act to disperse and stabilize the pigment particles. When added to a coatings formulation, the colorant will dilute the paint, contribute solvents and surfactants, and cause pre-existing surface-active agents to redistribute throughout the formulation - all of which tend to reduce the viscosity built by HEUR thickeners.

### Summary of the Invention

The present invention addresses a need in the art by providing a composition comprising (i) polymer particles comprising structural units of an organo-phosphorus monomer and (ii) a hydrophobically modified oxyalkylene-urethane polymer having a hydrophobic fragment represented by Structure I:

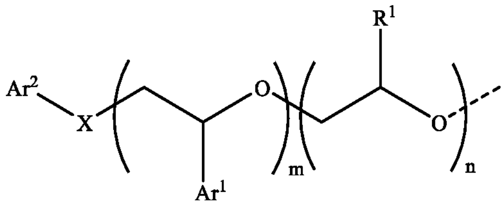

I

where the dotted line represents the point of attachment of the fragment to the hydrophobically modified oxyalkylene-urethane polymer; $Ar^1$ is unsubstituted phenyl, naphthyl, phenyl-O-$CH_2$-, phenyl-$CH_2$-O-$CH_2$-, or naphthyl-O-$CH_2$-; or phenyl, naphthyl, phenyl-O-$CH_2$-, phenyl-$CH_2$-O-$CH_2$-, or naphthyl-O-$CH_2$- substituted with from 1 to 3 $C_1$-$C_6$ alkyl or alkoxy groups; and $Ar^2$ is phenyl, phenyl-$OCH_2CH_2$-, phenyl-$(OCH_2CH_2)_y$-, benzyl, naphthyl, naphthyl-$CH_2$-, naphthyl-$OCH_2CH_2$-or naphthyl-$(OCH_2CH_2)_y$-, wherein the phenyl or naphthyl portion of $Ar^2$ is unsubstituted or substituted with from 1 to 3 $C_1$-$C_6$ alkyl groups; wherein y is from 2 to 10; each $R^1$ is independently H or $C_1$-$C_6$-alkyl; X is O or $NR^2$, wherein $R^2$ is H, $C_1$-$C_6$-alkyl, phenyl, or benzyl; m is from 1 to 20; and n is from 0 to 100. The compound of the present invention addresses a need in the art by providing viscosity stability upon tinting for paints containing polymer particles comprising structural units of an organo-phosphorus monomer and a hydrophobically modified oxyalkylene-urethane rheology modifier.

### Detailed Description of the Invention

The present invention is a composition comprising (i) polymer particles comprising structural units of an organo-phosphorus monomer and (ii) a hydrophobically modified oxyalkylene-urethane polymer having a hydrophobic fragment represented by Structure I:

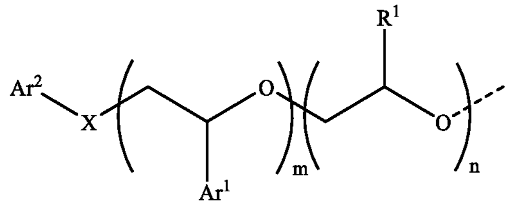

I

where the dotted line represents the point of attachment of the fragment to the hydrophobically modified oxyalkylene-urethane polymer; $Ar^1$ is unsubstituted phenyl, naphthyl, phenyl-O-$CH_2$-, phenyl-$CH_2$-O-$CH_2$-, or naphthyl-O-$CH_2$-; or phenyl, naphthyl, phenyl-O-$CH_2$-, phenyl-$CH_2$-O-$CH_2$-, or naphthyl-O-$CH_2$- substituted with from 1 to 3 $C_1$-$C_6$ alkyl or alkoxy groups; and $Ar^2$ is phenyl, phenyl-$OCH_2CH_2$-, phenyl-$(OCH_2CH_2)_y$-, benzyl, naphthyl, naphthyl-$CH_2$-, naphthyl-$OCH_2CH_2$-or naphthyl-$(OCH_2CH_2)_y$-, wherein the phenyl or naphthyl portion of $Ar^2$ is unsubstituted or substituted with from 1 to 3 $C_1$-$C_6$ alkyl groups; wherein y is from 2 to 10; each $R^1$ is independently H or $C_1$-$C_6$-alkyl; X is O or $NR^2$, wherein $R^2$ is H, $C_1$-$C_6$-alkyl, phenyl, or benzyl; m is from 1 to 20; and n is from 0 to 100.

As used herein, the term "oxyalkylene-urethane polymer" refers to water-soluble polyethylene oxide polymers, as well as water-soluble polyethylene oxide/polypropylene oxide and polyethylene oxide/polybutylene oxide copolymers. Preferably, the oxyalkylene-urethane polymer is an oxyethylene-urethane polymer.

As used herein, a hydrophobically modified oxyalkylene-urethane polymer refers to a polyethylene, polypropylene, or polybutylene oxide urethane polymer, preferably a polyethylene oxide urethane polymer (a HEUR) modified with the hydrophobe fragment of Structure I.

The fragment of Structure I is prepared with a capping agent which is a compound represented by Structure II:

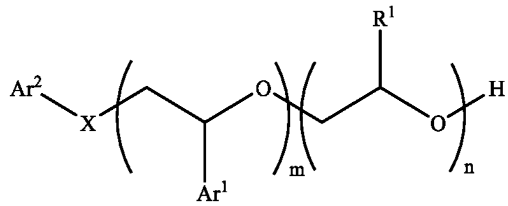

II

Examples of suitable diisocyanates include 1,4-tetramethylene diisocyanate, 1,6-hexamethylene diisocyanate (HDI), 2,2,4-trimethyl-1,6-diisocyanatohexane, 1,10-decamethylene diisocyanate, 4,4'-methylenebis(isocyanatocyclohexane) ($H_{12}$-MDI), 2,4'-methylenebis(isocyanatocyclohexane), 1,4-cyclohexylene diisocyanate, 1-isocyanato-3-isocyanatomethyl-3,5,5-trimethylcyclohexane (IPDI), *m*- and*p*-phenylene diisocyanate, 2,6- and 2,4-toluene diisocyanate (TDI), xylene diisocyanate, 4-chloro-1,3-phenylene diisocyanate, 4,4'-methylene diphenyl diisocyanate (MDI), 1,5-naphthylene diisocyanate, and 1,5-tetrahydronaphthylene diisocyanate. Examples of commercially available diisocyanates are Desmodur W cycloaliphatic diisocyanate (DesW) and Desmodur H (HDI).

A water-soluble polyalkylene glycol refers to water-soluble polyethylene oxides, water-soluble polyethylene oxide/polypropylene oxide copolymers, and water-soluble polyethylene oxide/polybutylene oxide copolymers. Preferred water-soluble polyalkylene oxides are polyethylene glycols, particularly polyethylene glycols having a weight average molecular weight in the range of from 600 to 12,000 Daltons. An example of a suitable polyethylene glycol is PEG 8000, which is commercially available as CARBOWAX™ 8000 Polyethylene Glycol (PEG-8000, a trademark of The Dow Chemical Company ("Dow") or an affiliate of Dow, Midland, MI).

The diisocyanate, the polyalkylene glycol, and the capping agent of Structure II are contacted under reaction conditions to form the hydrophobically modified oxyalkylene-urethane polymer. Preferably, the weight average molecular weight ($M_w$) of the hydrophobically modified oxyalkylene-urethane polymer, as determined by size exclusion chromatography (SEC) as described herein, is in the range of from 2000, more preferably from 4000 Daltons, to preferably 50,000, more preferably to 25,000 Daltons. Examples of preferred subclasses of fragments of the present invention are represented by the following structures:

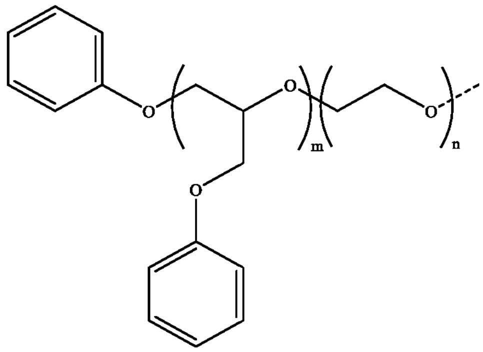

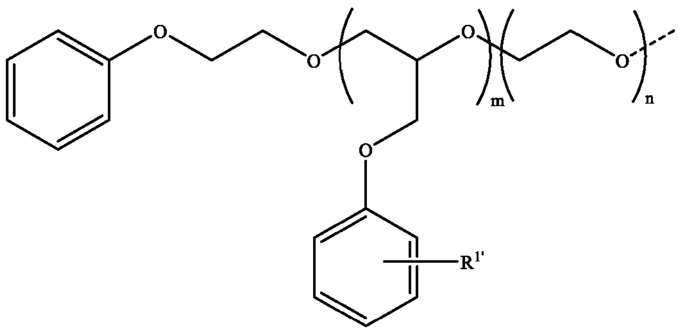

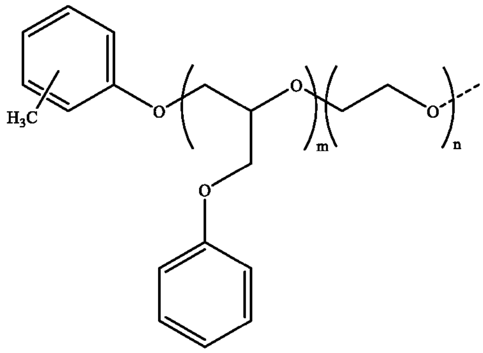

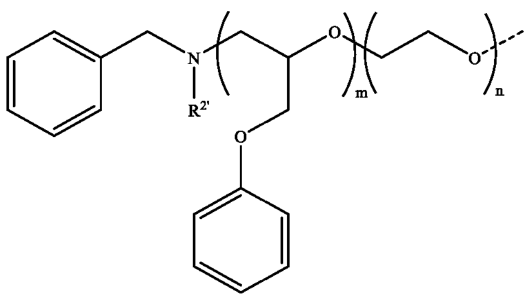

where $R^{1'}$ is H or $CH_3$; and $R^{2'}$ is $CH_3$ or benzyl.

Preferably, $Ar^1$ is phenyl-$OCH_2$- or *o*-methylphenyl-$OCH_2$-, more preferably phenyl-$OCH_2$-. Preferably, when X = O, $Ar^2$ is phenyl, phenyl-$OCH_2CH_2$-, or o-methylphenyl; preferably, when X = $NR^2$, $Ar^2$ is phenyl; and $R^2$ is benzyl, methyl, or ethyl. Preferably, m is in the range of from 1, more preferably from 2, to 10, more preferably to 6; and n is in the range from 0 to 40, more preferably from 1 to 30. Preferably, each $R^1$ is independently H, methyl, or ethyl; more preferably H or methyl; most preferably each $R^1$ is H. Preferably, X is O, N-$CH_3$, N-phenyl, or N-benzyl.

Preferably, the number average molecular weight ($M_n$) of the fragment of Structure I (and the compound of Structure II) as determined by matrix-assisted laser desorption/ionization-mass spectrometry (MALDI-MS), as described in the Example section herein below, is in the range of from 500 g/mol, more preferably from 750 g/mol, to 10,000, more preferably to 2500 g/mol, and most preferably to 1500 g/mol.

The compound of Structure II can be conveniently prepared by first contacting an aryl alcohol or an aryl amine

with an aryl glycidyl ether in the presence of a catalytic amount of a suitable base, such as KOH, under conditions sufficient to prepare an aryl alkoxy ether oligomer intermediate, then preferably contacting the intermediate with an alkylene oxide, such as ethylene oxide, under conditions sufficient to form the desired compound of Structure II. Preferably, the aryl alcohol is phenol, a cresol, or phenoxyethanol, or a combination thereof; the aryl amine is preferably N-methylbenzyl amine or dibenzyl amine, or a combination thereof; and the aryl alkoxy ether is preferably phenyl glycidyl ether.

The hydrophobically modified oxyalkylene-urethane polymer of the present invention may be advantageously solubilized in water with various other additives to prepare an aqueous thickener composition. The aqueous thickener composition comprises from 1, and more preferably from 5, to 60, and more preferably to 40 weight percent thickener solids, based on the total weight of the aqueous thickener composition. Other additives may be included in the aqueous thickener composition to suppress the viscosity of the aqueous thickener composition. Such other additives include water miscible solvents such as propylene glycol and diethylene glycol butyl ether. Examples of other additives include cylcodextrins and various nonionic and anionic surfactants. Examples of preferred nonionic surfactants include $C_6$-$C_{18}$ alcohol ethoxylates, lauryl alcohol ethoxylates, guerbet alcohol ethoxylates, and castor oil ethoxylates. Surfactants under the TERGITOL™ tradename (A Trademark of The Dow Chemical Company or Its Affiliates) are also suitable. Examples of suitable anionic surfactants include $C_6$-$C_{18}$ alcohol sulfates, sulfonates, sulfosuccinates, phosphates, as well as their ethoxylates, including sodium lauryl sulfate, sodium 2-ethylhexyl sulfate, sodium dodecylbenzene sulfonate, and sodium dioctyl sulfosuccinate.

For the hydrophobically modified oxyalkylene-urethane polymer where X = $NR^2$, sufficient acid is preferably added to the corresponding aqueous thickener composition to adjust its pH to a range of from 2.1 to 6.0. Any acid compound that can lower the pH to this range is suitable. Examples of preferred acids include, gluconic acid, phosphoric acid, hydrochloric acid, sulfuric acid, lactic acid and poly(acrylic acid)s.

The hydrophobically modified oxyalkylene-urethane polymer is useful as a rheology modifier in tinted coatings formulations.

The aqueous dispersion of polymer particles comprising structural units of an organo-phosphorus monomer (that is, the latex) is preferably a dispersion of polymer particles comprising structural units of an acrylate or a methacrylate monomer and structural units of an organo-phosphorus monomer.

The term "structural unit" of the named monomer refers to the remnant of the monomer after polymerization. For example, a structural unit of methyl methacrylate is as illustrated:

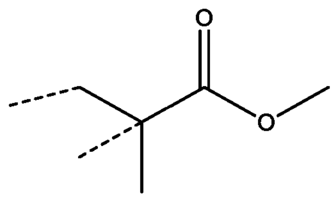

where the dotted lines represent the points of attachment of the structural unit to the polymer backbone.

Preferably, the organo-phosphorus monomer is a compound represented by Structure III:

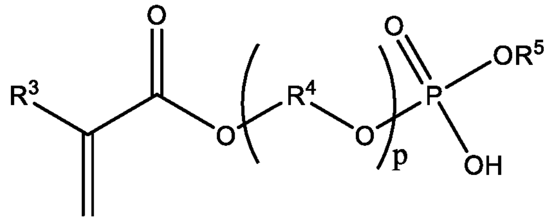

III

where $R^3$ is H or $-CH_3$; $R^4$ is a $C_1$-$C_6$ alkylene; $R^5$ is H or

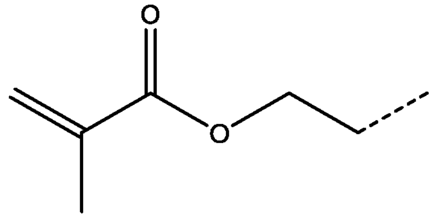

wherein the dotted line represents the point of attachment to the oxygen atom; and p is from 1 to 5. Preferably, $R^3$ is $-CH_3$, $R^4$ is $-CH_2CH_2-$ or $-CH_2CH_2CH_2-$, $R^5$ is H, and p is 1 or 2. More preferably, $R^3$ is $-CH_3$, $R^4$ is $-CH_2CH_2-$, $R^5$ is H, and p is 1.

Preferably, the polymer particles comprise at least 1, more preferably at least 3 weight percent, and even more preferably at least 5 weight percent, and no more than 15 weight percent, more preferably no more than 12 weight percent, and even more preferably no more than 10 weight percent structural units of the organo-phosphorus monomer relative to the total weight of the polymer particles.

Preferably, the polymer particles comprise at least 30, more preferably at least 50 weight percent and no more than 98, preferably no more than 90 weight percent structural units of acrylate and methacrylate monomers relative to the total weight of the polymer particles. Examples of suitable acrylate and methacrylate monomers include methyl methacrylate, ethyl methacrylate, butyl methacrylate, ureido methacrylate, ethyl acrylate, butyl acrylate, 2-ethylhexyl acrylate, and 2-propylheptyl acrylate. Preferred combinations of acrylate and methacrylate monomers include methyl methacrylate and one or more monomers selected from the group consisting of ethyl acrylate, butyl acrylate, ureido methacrylate, 2-propylheptyl acrylate, and 2-ethylhexyl acrylate. More preferred combinations of acrylic monomers include methyl methacrylate and butyl acrylate; methyl methacrylate and 2-ethylhexyl acrylate; and methyl methacrylate, butyl acrylate, and ethyl acrylate, with the combination of methyl methacrylate and butyl acrylate being most preferred. Examples of vinyl ester-based monomers include vinyl acetate and vinyl versatates. An example of a vinyl ester-based copolymer is vinyl acetate-ethylene (VAE).

The polymer particles may also include structural units of other monomers such as styrene, acetoacetoxyethyl methacrylate, acrylonitrile, acrylamide, and 2-acrylamido-2-methylpropane sulfonic acid. Additionally, the polymer particles preferably comprises from 0.2, more preferably from 0.5, and most preferably from 1 weight percent, to preferably 5, and more preferably to 3 weight percent structural units of an ethylenically unsaturated carboxylic acid monomer such as acrylic acid, methacrylic acid, or itaconic acid.

The polymer particles may have any morphology known in the art. The polymer particles may be block or random copolymers comprising structural units of an organo-phosphorus monomer. Alternatively, the polymer particles may be composite polymers comprising structural units of an organo-phosphorus monomer. Examples of composite polymers include spherical core-shell particles and particles having an acorn morphology, where a particle comprises a small protuberance off of a larger spherical particle. Such composite polymers are disclosed in U.S. Patent No. 9,745,492 and U.S. Patent No. 9,745,478, respectively.

The composition of the present invention may be formed as an aqueous dispersion of a) 10 to 60 weight percent, based on the weight of the composition, of polymer particles; b) and from 0.05 to 2 weight percent, based on the weight of the composition, of a hydrophobically modified oxyalkylene-urethane polymer having the hydrophobic fragment of structure I.

The composition of the present invention may be contacted with a colorant at a sufficient concentration to impart the desired color. As used herein, "colorant" refers to a liquid dispersion of a colored pigment. The concentration of colorant is generally present in the range of from 5 to 20 volume percent of the total volume of the paint and colorant. Examples of colored pigments include phthalocyanine blue, phthalocyanine green, monoarylide yellow, diarylide yellow, benzimidazolone yellow, heterocyclic yellow, DAN orange, quinacridone magenta, quinacridone violet, organic reds, including metallized azo reds and nonmetallized azo reds, carbon black, lampblack, black iron oxide, yellow iron oxide, brown iron oxide, and red iron oxide.

In another aspect, the composition comprises less than 15 PVC of $TiO_2$ or $BaSO_4$ particles; in yet another aspect, the composition comprises less than 10 PVC of $TiO_2$ and $BaSO_4$ particles. For deep base formulations, the PVC of $TiO_2$ and $BaSO_4$ particles is <1. PVC is defined by the following formula:

$$PVC = \left[\frac{Vol\ (Pigment + Extender)}{Vol\ (Pigment + Extender + Binder\ Solids)}\right] x\ 100$$

where binder solids refers to the contribution of polymer from the aqueous dispersion of the polymer particles that bind the pigment and extender particles together.

The composition may further include any or all of the following materials: binders, dispersants, pigments,

defoamers, surfactants, solvents, extenders, coalescents, biocides, and opaque polymers.

Examples

Preparation of an Amino Phenyl Glycidyl Ether Ethoxylate Block Copolymer and HEUR

An amino phenyl glycidyl ether ethoxylate block copolymer intermediate and corresponding HEUR (Inventive HEUR 1) was prepared in a similar fashion as described in U.S. Patent Application Publication No. US 2020/0262975. Deep paint formulations according to Table 1 were then prepared using Inventive HEUR 1 and Comparative HEUR 1 (prepared in a similar fashion as described for Comparative Example 1 in U.S. Patent Application Publication No. US 2021/0017380, except the polymer was dissolved in water with gluconic acid to form a final aqueous mixture of 20 wt% Comparative HEUR 1, 3.5 wt% gluconic acid, and 76.5 wt% water)) as KU builders and various latexes with and without structural units of organo-phosphorous monomer in the inventive and comparative examples.

Latex 1 is an acrylic latex that does not comprise structural units of organo-phosphorous monomer and was prepared in a similar fashion as described in U.S. Patent No. 7,695,770.

Latex 2 is an acrylic latex comprising structural units of organo-phosphorous monomer and was prepared in a similar fashion as described in U.S. Patent No. 8,318,848.

Latex 3 is an acrylic latex comprising structural units of organo-phosphorous monomer and was prepared according to Example 1 in U.S. Patent No. 9,920,194.

Table 1 is a recipe for the deep base paint formulation, that is, the paint without colorant.

Table 1 - Deep Base Paint Formulation

| ***Amounts, lbs/100 gal (amounts in g/l)*** | **Comp. Ex. 1** | **Comp Ex. 2** | **Comp Ex. 3** | **Inv. Ex. 1** | **Comp Ex. 4** | **Inv. Ex. 2** |
|---|---|---|---|---|---|---|
| **Grind** | | | | | | |
| Water | 19.52 (23.40) | 19.52 (23.40) | 19.52 (23.40) | 19.52 (23.40) | 19.52 (23.40) | 19.52 (23.40) |
| BYK-024(defoamer) | 1.00 (1.20) | 1.00 (1.20) | 1.00 (1.20) | 1.00 (1.20) | 1.00 (1.20) | 1.00 (1.20) |
| TAMOL 2011 (dispersant) | 7.25 (8.69) | 7.25 (8.69) | 7.25 (8.69) | 7.25 (8.69) | 7.25 (8.69) | 7.25 (8.69) |
| TERGITOL 15-S-20 (surfactant) | 2.00 (2.40) | 2.00 (2.40) | 2.00 (2.40) | 2.00 (2.40) | 2.00 (2.40) | 2.00 (2.40) |
| AM P-95 (Neutralizer) | 1.00 (1.20) | 1.00 (1.20) | 1.00 (1.20) | 1.00 (1.20) | 1.00 (1.20) | 1.00 (1.20) |
| Minex 10 (Extender) | 49.86 (59.75) | 49.86 (59.75) | 49.86 (59.75) | 49.86 (59.75) | 49.86 (59.75) | 49.86 (59.75) |
| **End Grind** | 80.62 (96.60) | 80.62 (96.60) | 80.62 (96.60) | 80.62 (96.60) | 80.62 (96.60) | 80.62 (96.60) |
| **LetDown** | | | | | | |
| Water | 63.00 (75.49) | 63.00 (75.49) | 63.00 (75.49) | 63.00 (75.49) | 30.70 (36.79) | 30.70 (36.79) |
| **Latex 1** | **616.24 (738.41)** | **616.24 (738.41)** | - | - | - | - |
| **Latex 2** | - | - | **616.24 (738.41)** | **616.24 (738.41)** | - | - |
| **Latex 3** | - | - | - | - | **646.79 (775.03)** | **646.79 (775.03)** |
| TEXANOL (coalescent) | 15.62 (18.72) | 15.62 (18.72) | 15.56 (18.64) | 15.62 (18.72) | 15.62 (18.72) | 15.62 (18.72) |
| BYK-024 (Defoamer) | 1.00 (1.20) | 1.00 (1.20) | 1.00 (1.20) | 1.00 (1.20) | 1.00 (1.20) | 1.00 (1.20) |
| TERGITOL 15-S-20 (Surfactant) | 2.00 (2.40) | 2.00 (2.40) | 2.00 (2.40) | 2.00 (2.40) | 2.00 (2.40) | 2.00 (2.40) |

(continued)

| *Amounts, lbs/100 gal (amounts in g/l)* | **Comp. Ex. 1** | **Comp Ex. 2** | **Comp Ex. 3** | **Inv. Ex. 1** | **Comp Ex. 4** | **Inv. Ex. 2** |
|---|---|---|---|---|---|---|
| Water | 90.35 (108.26) | 91.16 (109.23) | 81.00 (97.06) | 82.00 (98.26) | 95.00 (113.84) | 95.50 (114.43) |
| ACRYSOL RM-3030 (ICI Builder) | 30.43 (36.46) | 29.87 (35.79) | 40.00 (47.93) | 40.00 (47.93) | 27.00 (32.35) | 27.00 (32.35) |
| **Comparative HEUR 1 (KU Builder)** | **4.23 (5.07)** | **-** | **4.00 (4.79)** | **-** | **3.00 (3.59)** | **-** |
| **Inventive HEUR 1 (KU Builder)** | **-** | **3.97 (4.76)** | **-** | **3.00 (3.59)** | **-** | **2.50 (3.00)** |
| **End LetDown** | 822.87 (986.02) | 822.86 (986.00) | 822.80 (985.93) | 822.86 (986.00) | 821.11 (983.91) | 821.11 (983.91) |
| **Totals** | **903.49 (1082.6)** | **903.48 (1082.6)** | **903.42 (1082.5)** | **903.48 (1082.6)** | **901.74 (1080.5)** | **901.73 (1080.5)** |
| **Krebs Storm Viscosity** | **95.5** | **95.2** | **94.8** | **92.9** | **102.8** | **100.8** |
| **ICI Viscosity in P (viscosity in Pa.s)** | **1.51 (0.151)** | **1.0 (0.10)** | **1.51 (0.151)** | **1.59 (0.159)** | **1.51 (0.151)** | **1.60 (0.160)** |

TAMOL, TERGITOL, and ACRYSOL are all Trademarks of The Dow Chemical Company or its Affiliates.

Tinting

40g of base paint is placed in a small FlakTek cup and the appropriate amount of colorant added to achieve short-fill tinting levels between 12 oz/gal (98.6 g/l). The paint and colorant are mixed at 2500 RPM for 3 minutes on a Flak Tek Speed Mixer (DAC 150 FVZ), and tinted paints allowed to sit overnight and hand-stirred with a wooden applicator prior to any rheology testing.

Paints were tinted with universal colorants from Chromaflow Technologies, including: COLORTREND® 808 Phthalo Blue (808-7214), a low-VOC colorant with organic pigment; COLORTREND® 808 Yellow Iron Oxide (808-1810), a low-VOC colorant with inorganic pigment; a blend of equal parts by weight: COLORTREND® 808 Phthalo Blue (808-7214), COLORTREND® 808 Yellow Iron Oxide (808-1810), COLORTREND® 808 Titanium White (808-0018), COLORTREND® 808 Lamp Black (808-9907); and COLORTREND® 888 Phthalo Blue (888-7214), a high-VOC colorant with organic pigment.

Viscosity Testing

The viscosity of paints before and after tinting is measured on a TA Instruments DHR-3 rheometer equipped with a 2 degree, 40 mm cone-and-plate upper geometry, Peltiercontrolled temperature lower plate, and a solvent trap to minimize sample evaporation. Approximately 0.7 mL of paint is delivered to the lower plate via a syringe and the sample geometry lowered and sealed without trimming. A shear rate of 75 $s^{-1}$ is applied for 90 seconds and the steady state "mid-shear" viscosity $\eta_{MS}$ is recorded. The mid-shear viscosity drop on tinting is calculated as:

$$\Delta\eta_{MS} = \left[\frac{\eta_{MS}^{tinted} - \eta_{MS}^{pre-tint}}{\eta_{MS}^{pre-tint}}\right] \times 100\%$$

Testing

Mid-shear viscosity drop on tinting for 35 VS, 8 PVC deep base paints formulated with latexes with and without structural units of organo-phosphorous monomer and conventional (Comparative HEUR 1) vs inventive KU builder (Inventive HEUR 1). Paints are tinted with 12 oz/gal (98.6 g/l) colorant by adding the specified mass of colorant to 40 g of the base paint. The values represent the drop in mid-shear viscosity after tinting as a percent of the base paint viscosity.

Tinting is done with two low-VOC colorants (Phthalo Blue - organic colorant, Yellow oxide - inorganic colorant), a low-VOC colorant blend (equal parts by wt of 4 colorants) and a high-VOC organic colorant. The individual colorant viscosity drops and the average are reported in Table 2 below.

Table 2 - Colorant Viscosity Drops ($\Delta\eta_{MS}$)

| | KU builder: | Comparative HEUR 1<br>Alkylamine Hydrophobic Group | | | Inventive HEUR 1<br>Amino phenyl glycidyl ether ethoxylate block copolymer hydrophobic group | | |
|---|---|---|---|---|---|---|---|
| | Binder: | Latex 1 | Latex 2 | Latex 3 | Latex 1 | Latex 2 | Latex 3 |
| *Colorant* | *g colorant added to 40 g base paint* | Comp. Ex 1 | Comp. Ex 3 | Comp. Ex 4 | Comp. Ex 2 | Inv. Ex 1 | Inv. Ex 2 |
| 808-7214 Phthalo Blue | 5.3 | -53.5% | -58.1 % | -78.1% | -46.8% | -42.5% | -36.7% |
| 808-1810 Yellow Oxide | 7.0 | -18.4% | -33.7% | -69.8% | -36.7% | -27.4% | -13.2% |
| 888-7214 Phthalo Blue | 5.3 | -42.7% | -55.6% | -78.1% | -48.5% | -35.4% | -13.4% |
| 808 Blend | 6.3 | -38.7% | -50.1% | -83.5% | -35.0% | -34.6% | -36.7% |
| | **Average** | **-38.3%** | **-49.4%** | **-77.4%** | **-41.8%** | **-35.0%** | **-25.0%** |

Comparative Examples 1 and 2 demonstrated similar viscosity drops on tinting with the two different HEUR chemistries (Comparative HEUR 1 vs. Inventive HEUR 1) when used in combination with a latex without structural units of organo-phosphorous monomer (Latex 1) Comparative Examples 3 and 4 demonstrate that Comparative HEUR 1 has more problematic viscosity drops on tinting when paired with Latex 2 or Latex 3 (both comprise structural units of organo-phosphorous monomer) when compared to Latex 1 used in Comparative Example 1.

Surprisingly, Inventive Examples 1 and 2 significantly yielded the opposite results when Latex 2 or Latex 3 was used in place of Latex 1. In contrast to Comparative Examples 3 and 4, which had greater average viscosity drops when the Latex 1 was replaced with Latex 2 or Latex 3, Inventive Examples 1 and 2 had lower average viscosity drops when Latex 1 was replaced with Latex 2 or Latex 3.

## Claims

1. A composition comprising:

(i) polymer particles comprising structural units of an organo-phosphorus monomer; and
(ii) a hydrophobically modified oxyalkylene-urethane polymer having a hydrophobic fragment represented by Structure I:

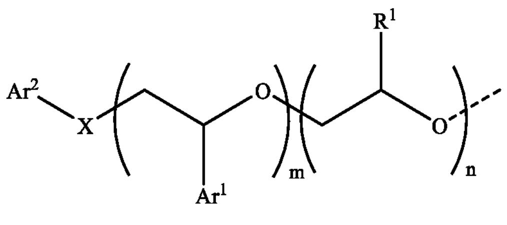

I

where the dotted line represents the point of attachment of the fragment to the hydrophobically modified oxyalkylene-urethane polymer;
$Ar^1$ is unsubstituted phenyl, naphthyl, phenyl-O-$CH_2$-, phenyl-$CH_2$-O-$CH_2$-, or naphthyl-O-$CH_2$-; or phenyl, naphthyl, phenyl-O-$CH_2$-, phenyl-$CH_2$-O-$CH_2$-, or naphthyl-O-$CH_2$-substituted with from 1 to 3 $C_1$-$C_6$ alkyl or alkoxy groups;
$Ar^2$ is phenyl, phenyl-$OCH_2CH_2$-, phenyl-$(OCH_2CH_2)_y$-, benzyl, naphthyl, naphthyl-$CH_2$-, naphthyl-

$OCH_2CH_2$- or naphthyl-$(OCH_2CH_2)_y$-, wherein the phenyl or naphthyl portion of $Ar^2$ is unsubstituted or substituted with from 1 to 3 $C_1$-$C_6$ alkyl groups, and wherein y is from 2 to 10;
each $R^1$ is independently H or $C_1$-$C_6$-alkyl;
X is O or $NR^2$, wherein $R^2$ is H, $C_1$-$C_6$-alkyl, phenyl, or benzyl;
m is from 1 to 20; and
n is from 0 to 100.

2. The composition of Claim 1 wherein the organo-phosphorus monomer is a compound represented by Structure III:

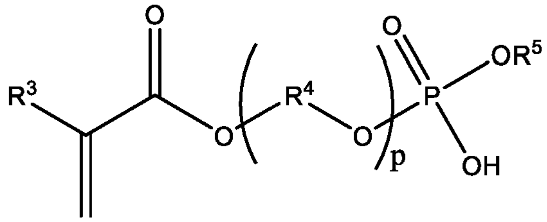

III

wherein:

$R^3$ is H or $-CH_3$;
$R^4$ is a $C_1$-$C_6$ alkylene;
$R^5$ is H or

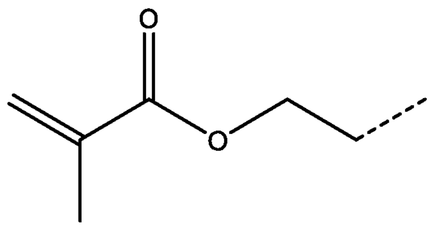

wherein the dotted line represents the point of attachment to the oxygen atom; and
p is from 1 to 5.

3. The composition of Claim 2 wherein $R^3$ is $-CH_3$, $R^4$ is $-CH_2CH_2-$, $R^5$ is H, and p is 1

4. The composition of any one of the preceding claims wherein the polymer particles comprise at least 2 weight percent to 10 weight percent structural units of the organo-phosphorus monomer relative to the total weight of the polymer particles.

5. The composition of any one of the preceding claims wherein the polymer particles further comprise at least 30 weight percent to 98 weight percent structural units of acrylate and methacrylate monomers relative to the total weight of the polymer particles.

6. The composition of any one of the preceding claims wherein:

$Ar^1$ is phenyl-O-$CH_2$-or *o*-methylphenyl-O-$CH_2$-;
$Ar^2$ is phenyl, phenyl-$OCH_2CH_2$-, or *o*-methylphenyl;
each $R^1$ is independently H or $CH_3$;
m is from 1 to 10; and
n is from 0 to 40.

7. The composition of any one of the preceding claims wherein the hydrophobic fragment has a number average molecular weight ($M_n$) in the range of from 500 to 10,000 g/mol; and X is O, or N-$CH_3$, N-phenyl, or N-benzyl.

**8.** The composition of claim 7 which wherein the hydrophobic fragment has an $M_n$ in the range of from 500 to 2500 g/mol and is selected from the group consisting of:

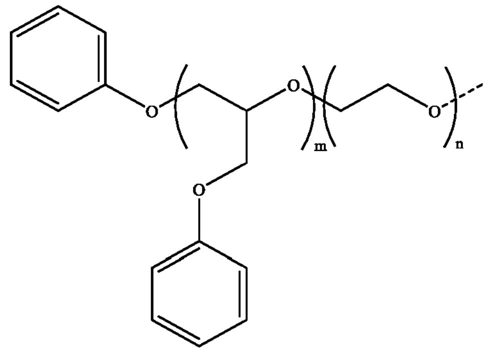

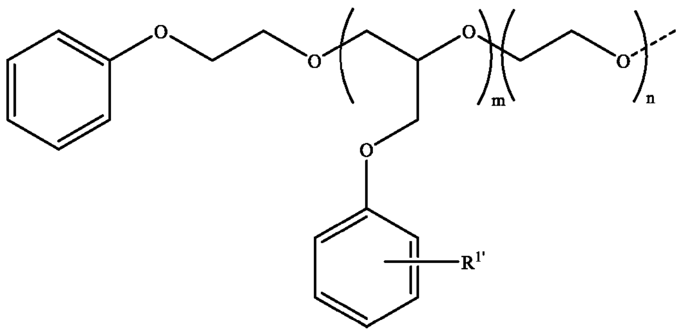

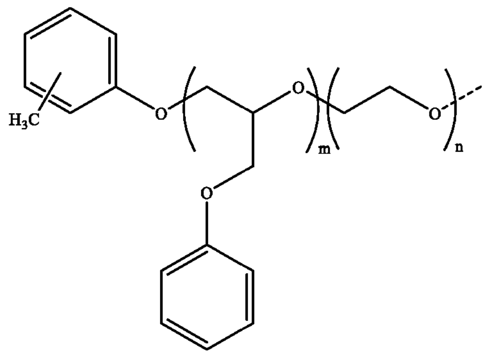

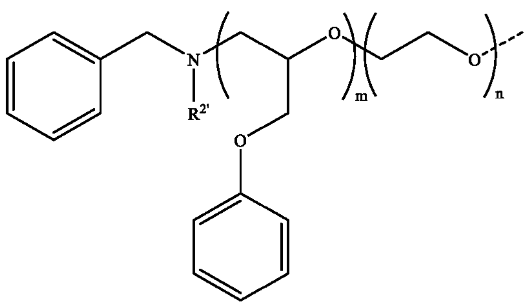

where $R^{1'}$ is H or $CH_3$; and $R^{2'}$ is $CH_3$ or benzyl.

**9.** The composition according to any one of the preceding claims comprising an aqueous dispersion of 10 to 60 weight percent, based on the weight of the composition, of the polymer particles; and from 0.05 to 2 weight percent, based on the weight of the composition, of the hydrophobically modified oxyalkylene-urethane polymer.

**10.** The composition of any one of the preceding claims which comprises less than 10 PVC of $TiO_2$ or $BaSO_4$ particles.

**11.** The composition of any one of the preceding claims which further includes one or more materials selected from the group consisting of binders, dispersants, pigments, defoamers, surfactants, solvents, extenders, coalescents, biocides, and opaque polymers.

**12.** The composition of any one of the preceding claims, wherein the hydrophobically modified oxyalkylene-urethane polymer is a hydrophobically modified oxyethylene-urethane polymer.

**Patentansprüche**

**1.** Zusammensetzung, umfassend:

(i) Polymerpartikel, die Struktureinheiten eines Organophosphor-Monomers umfassen; und
(ii) ein hydrophob modifiziertes Oxyalkylen-Urethan-Polymer mit einem hydrophoben Fragment, das durch Struktur I dargestellt wird:

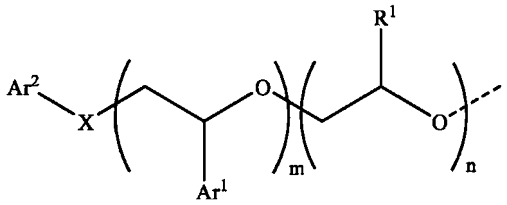

I

wobei die gestrichelte Linie die Verknüpfungsstelle des Fragments mit dem hydrophob modifizierten Oxyalkylen-Urethan-Polymer darstellt;
$Ar^1$ unsubstituiertes Phenyl, Naphthyl, Phenyl-O-$CH_2$-, Phenyl-$CH_2$-O-$CH_2$- oder Naphthyl-O-$CH_2$-; oder Phenyl, Naphthyl, Phenyl-O-$CH_2$-, Phenyl-$CH_2$-O-$CH_2$- oder Naphthyl-O-$CH_2$-, substituiert mit 1 bis 3 $C_1$-$C_6$-Alkyl- oder Alkoxygruppen, ist;
$Ar^2$ Phenyl, Phenyl-$OCH_2CH_2$-, Phenyl-$(OCH_2CH_2)_y$-, Benzyl, Naphthyl, Naphthyl-$CH_2$-, Naphthyl-$OCH_2CH_2$- oder Naphthyl-$(OCH_2CH_2)_y$- ist, wobei der Phenyl- oder Naphthyl-Anteil von $Ar^2$ unsubstituiert oder mit 1 bis 3 $C_1$-$C_6$-Alkylgruppen substituiert ist und wobei y 2 bis 10 ist;
jedes $R^1$ unabhängig voneinander H oder $C_1$-$C_6$-Alkyl ist;
X O oder $NR^2$ ist, wobei $R^2$ H, $C_1$-$C_6$-Alkyl, Phenyl oder Benzyl ist;
m 1 bis 20 ist und
n 0 bis 100 ist.

**2.** Zusammensetzung nach Anspruch 1, wobei das Organophosphor-Monomer eine Verbindung ist, die durch Struktur III dargestellt wird:

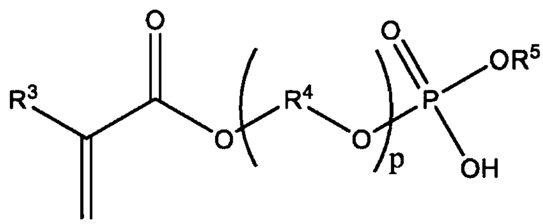

III ,

worin:

$R^3$ H oder -$CH_3$ ist;
$R^4$ ein $C_1$-$C_6$-Alkylen ist;
$R^5$ H oder

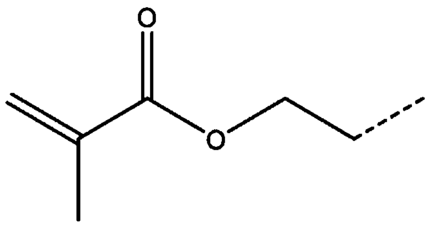

ist,
wobei die gestrichelte Linie die Verknüpfungsstelle mit dem Sauerstoffatom darstellt; und
p 1 bis 5 ist.

**3.** Zusammensetzung nach Anspruch 2, wobei $R^3$ $-CH_3$ ist, $R^4$ $-CH_2CH_2-$ ist, $R^5$ H ist und p 1 ist.

**4.** Zusammensetzung nach einem der vorstehenden Ansprüche, wobei die Polymerpartikel zu mindestens 2 Gewichtsprozent bis 10 Gewichtsprozent, bezogen auf das Gesamtgewicht der Polymerpartikel, Struktureinheiten des Organophosphor-Monomers umfassen.

**5.** Zusammensetzung nach einem der vorstehenden Ansprüche, wobei die Polymerpartikel ferner zu mindestens 30 Gewichtsprozent bis 98 Gewichtsprozent, bezogen auf das Gesamtgewicht der Polymerpartikel, Struktureinheiten von Acrylat- und Methacrylat-Monomeren umfassen.

**6.** Zusammensetzung nach einem der vorstehenden Ansprüche, wobei

$Ar^1$ Phenyl-O-$CH_2$- oder *o*-Methylphenyl-O-$CH_2$- ist;
$Ar^2$ Phenyl, Phenyl-$OCH_2CH_2$- oder *o*-Methylphenyl ist;
jedes $R^1$ unabhängig voneinander H oder $CH_3$ ist;
m 1 bis 10 ist und
n 0 bis 40 ist.

**7.** Zusammensetzung nach einem der vorstehenden Ansprüche, die wobei das hydrophobe Fragment ein zahlenmittleres Molekulargewicht ($M_n$) im Bereich von 500 bis 10.000 g/mol aufweist und X O oder N-$CH_3$, N-Phenyl oder N-Benzyl ist.

**8.** Zusammensetzung nach Anspruch 7, wobei das hydrophobe Fragment ein $M_n$ im Bereich von 500 bis 2500 g/mol aufweist und aus der Gruppe ausgewählt ist, bestehend aus:

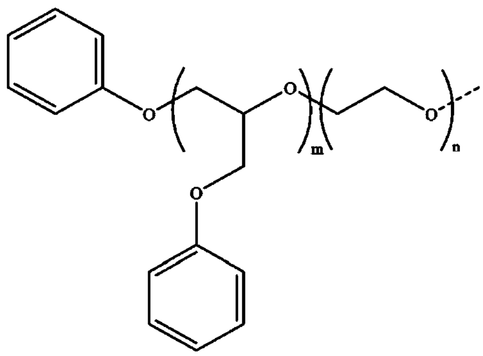

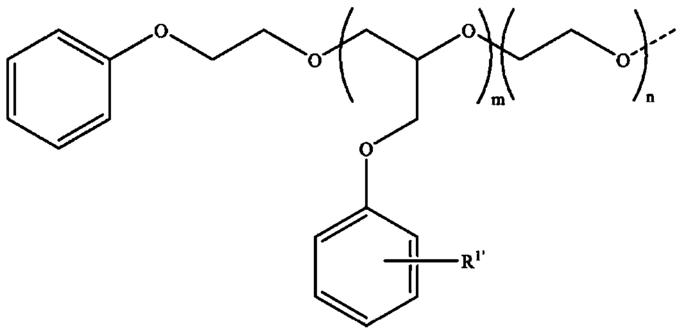

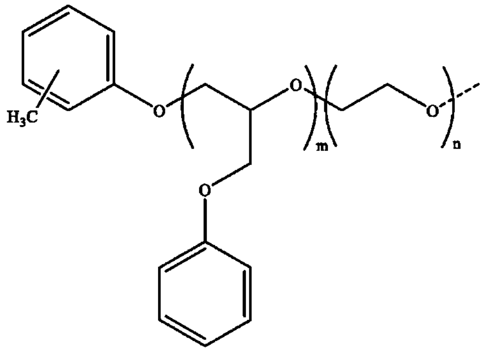

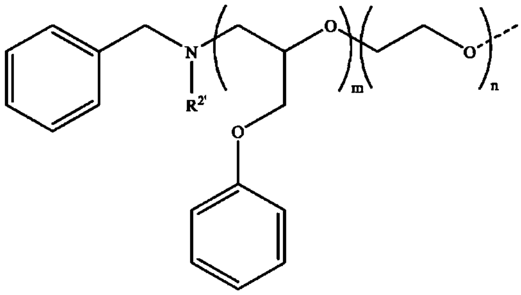

,

worin $R^{1'}$ H oder $CH_3$ ist und $R^{2'}$ $CH_3$ oder Benzyl ist.

**9.** Zusammensetzung nach einem der vorstehenden Ansprüche, umfassend eine wässrige Dispersion von zu 10 bis 60 Gewichtsprozent, bezogen auf das Gewicht der Zusammensetzung, den Polymerpartikeln, und zu 0,05 bis 2 Gewichtsprozent, bezogen auf das Gewicht der Zusammensetzung, dem hydrophob modifizierten Oxyalkylen-Urethan-Polymer.

**10.** Zusammensetzung nach einem der vorstehenden Ansprüche, die weniger als 10 PVK $TiO_2$- oder $BaSO_4$-Partikel umfasst.

**11.** Zusammensetzung nach einem der vorstehenden Ansprüche, die ferner ein oder mehrere Materialien umfasst, die aus der Gruppe, bestehend aus Bindemitteln, Dispergiermitteln, Pigmenten, Entschäumern, Tensiden, Lösungsmitteln, Streckmitteln, Koaleszenzmitteln, Bioziden und opaken Polymeren, ausgewählt sind.

**12.** Zusammensetzung nach einem der vorstehenden Ansprüche, wobei das hydrophob modifizierte Oxyalkylen-Urethan-Polymer ein hydrophob modifiziertes Oxyethylen-Urethan-Polymer ist.

## Revendications

**1.** Composition comprenant :

(i) des particules de polymère comprenant des motifs structuraux d'un monomère organophosphoré ; et
(ii) un polymère oxyalkylène-uréthane à modification hydrophobe ayant un fragment hydrophobe représenté par la Structure I :

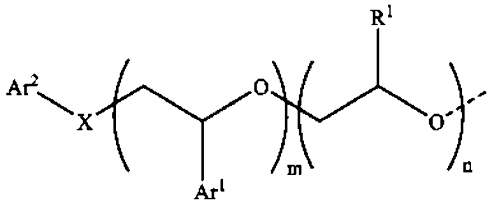

I

où la ligne pointillée représente le point d'attache du fragment au polymère oxyalkylène-uréthane à modification hydrophobe ;
$Ar^1$ est phényle non substitué, naphtyle, phényl-O-$CH_2$-, phényl-$CH_2$-O-$CH_2$-, ou naphtyl-O-$CH_2$- ; ou phényle, naphtyle, phényl-O-$CH_2$-, phényl-$CH_2$-O-$CH_2$-, ou naphtyl-O-$CH_2$- substitué par 1 à 3 groupes alkyl ou alcoxy en $C_1$-$C_6$ ;
$Ar^2$ est phényle, phényl-$OCH_2CH_2$-, phényl-$(OCH_2CH_2)_y$-, benzyle, naphtyle, naphtyl-$CH_2$-, naphtyl-$OCH_2CH_2$- ou naphtyl-$(OCH_2CH_2)_y$-, dans laquelle la partie phényle ou naphtyle de $Ar^2$ est non substituée ou substituée par 1 à 3 groupes alkyle en $C_1$-$C_6$, et dans laquelle y va de 2 à 10 ;
chaque $R^1$ est indépendamment H ou alkyle en $C_1$-$C_6$ ;
X est O ou $NR^2$, dans laquelle $R^2$ est H, alkyle en $C_1$-$C_6$, phényle, ou benzyle ;
m va de 1 à 20 ; et
n va de 0 à 100.

**2.** Composition selon la revendication 1, dans laquelle le monomère organophosphoré est un composé représenté par la Structure III:

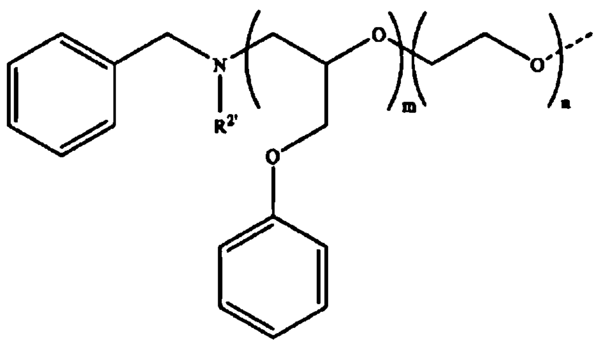

III

dans laquelle :

$R^3$ est H ou -$CH_3$ ;
$R^4$ est un alkylène en $C_1$-$C_6$ ;
$R^5$ est H ou

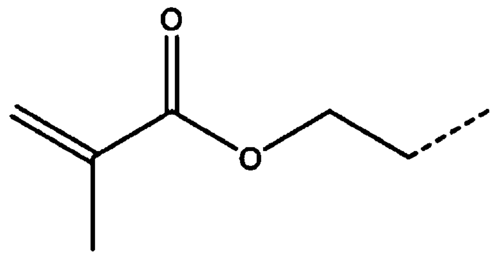

dans laquelle la ligne pointillée représente le point d'attache à l'atome d'oxygène ; et
p va de 1 à 5.

**3.** Composition selon la revendication 2, dans laquelle $R^3$ est $-CH_3$, $R^4$ est $-CH_2CH_2-$, $R^5$ est H, et p vaut 1

**4.** Composition selon l'une quelconque des revendications précédentes, dans laquelle les particules de polymère comprennent au moins 2 pour cent à 10 pour cent en poids de motifs structurels du monomère organo-phosphoré par rapport au poids total des particules de polymère.

**5.** Composition selon l'une quelconque des revendications précédentes, dans laquelle les particules de polymère comprennent en outre au moins 30 pour cent en poids à 98 pour cent en poids de motifs structurels de monomères acrylate et méthacrylate par rapport au poids total des particules de polymère.

**6.** Composition selon l'une quelconque des revendications précédentes, dans laquelle :

$Ar^1$ est phényl-O-$CH_2$-ou *o*-méthylphényl-O-$CH_2$- ;
$Ar^2$ est phényle, phényl-$OCH_2CH_2$-, ou *o*-méthylphényle ;
chaque $R^1$ est indépendamment H ou $CH_3$ ;
m va de 1 à 10 ; et
n va de 0 à 40.

**7.** Composition selon l'une quelconque des revendications précédentes, dans laquelle le fragment hydrophobe a une masse moléculaire moyenne en nombre ($M_n$) comprise dans la plage allant de 500 à 10 000 g/mol ; et X est O, ou N-$CH_3$, N-phényle, ou N-benzyle.

**8.** Composition selon la revendication 7, dans laquelle le fragment hydrophobe a une $M_n$ comprise dans la plage allant de 500 à 2 500 g/mol et est choisi dans le groupe constitué de :

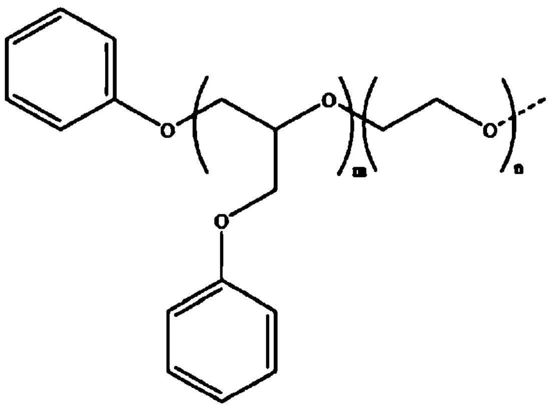

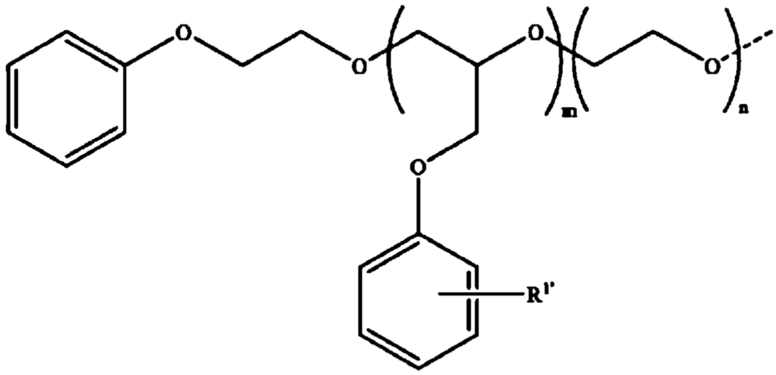

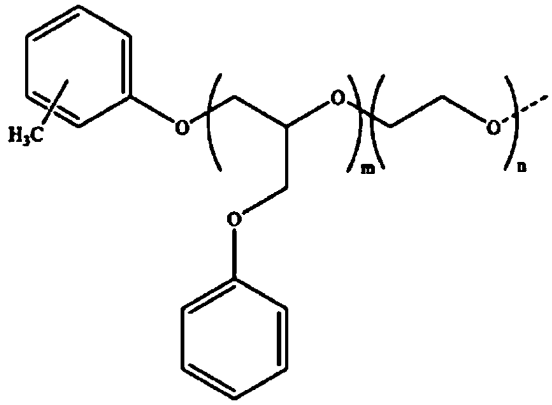

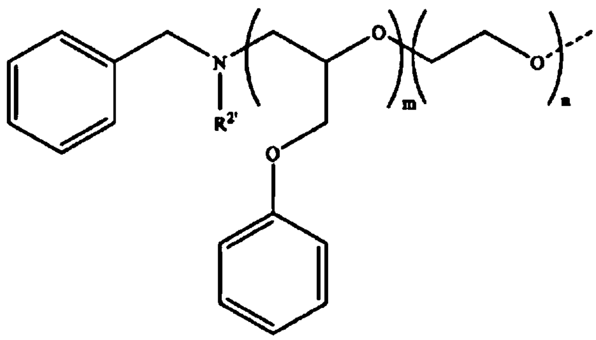

où $R^{1'}$ est H ou $CH_3$ ; et $R^{2'}$ est $CH_3$ ou benzyle.

9. Composition selon l'une quelconque des revendications précédentes, comprenant une dispersion aqueuse de 10 à 60 pour cent en poids, sur la base du poids de la composition, des particules de polymère ; et de 0,05 à 2 pour cent en poids, sur la base du poids de la composition, du polymère oxyalkylène-uréthane à modification hydrophobe.

10. Composition selon l'une quelconque des revendications précédentes, qui comprend moins de 10 PVC de particules de $TiO_2$ ou $BaSO_4$.

11. Composition selon l'une quelconque des revendications précédentes, qui comporte en outre un ou plusieurs matériaux choisis dans le groupe constitué de liants, dispersants, pigments, agents antimousse, agents tensioactifs, solvants, diluants, coalescents, biocides, et polymères opaques.

12. Composition selon l'une quelconque des revendications précédentes, dans laquelle le polymère oxyalkylène-uréthane à modification hydrophobe est un polymère oxyéthylène-uréthane à modification hydrophobe.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 9745492 B
- US 9745478 B
- US 20200262975
- US 20210017380 A
- US 7695770 B
- US 8318848 B
- US 9920194 B